# EUROPÄISCHE PATENTANMELDUNG

(11) **EP 2 070 993 A1**
(43) Veröffentlichungstag der Anmeldung: **17.06.2009**
(21) Anmeldenummer: 08105124.5
(22) Anmeldetag: 25.08.2008
(51) Int. Cl.: C09C 1/30, C09C 3/12

(54) **Verfahren zur Dispergierung von feinteiligen anorganischen Pulvern in flüssigen Medien unter Verwendung von reaktiven Siloxanan**

(30) Priorität: 17.09.2007 DE 102007044302
(71) Anmelder: Bühler Partec GmbH, 66123 Saarbrücken (DE)
(72) Erfinder: Steingröver, Klaus, 66125 Saarbrücken (DE); Tabellion, Frank, 66121 Saarbrücken (DE); Pilotek, Steffen, Austin, TX 78756 (US); Kihm, Michael, 66123 Saarbrücken (DE)
(74) Vertreter: Frommhold, Joachim

(57) **Zusammenfassung**

Die Erfindung bezieht sich auf ein Verfahren zur Dispergierung von feinteiligen oberflächenmodifizierten anorganischen Pulvern in flüssigen Medien unter Verwendung von Siloxanen.

Es wird ein Verfahren zur Herstellung einer Dispersion von anorganischen Partikeln in einem flüssigen Medium beschrieben, bei dem anorganische Partikel, die oberflächenmodifiziert sind, so dass sie mindestens eine organische Gruppe auf der Oberfläche aufweisen, in einem flüssigen Medium mit einem Organosiloxan vermischt werden, wobei mindestens eine organische Gruppe des Organosiloxans der mindestens einen organischen Gruppe auf der Oberfläche der anorganischen Partikel entspricht.

## Beschreibung

Die Erfindung betrifft ein Verfahren zur Dispergierung von anorganischen Pulvern in flüssigen Medien.

Die Verwendung von Pulvern als Füllstoffen in Lacken, Filmen, Überzügen und Formmassen kann eine Verbesserung einer Vielzahl von Eigenschaften, wie Zug- und Druckfestigkeit, Abriebfestigkeit, allgemein der mechanischen Stabilität, und Verarbeitbarkeit, ergeben. Darüber hinaus können über funktionelle Füllstoffe weitere Eigenschaften in die Werkstoffe eingebracht werden, wie Farbigkeit durch Farbpigmente, UV-Schutz, magnetische, optische oder elektrische Eigenschaften. Pigmente soll hier ganz allgemein z.B. Füllstoffe, Farbpigmente oder funktionelle Pigmente umfassen.

Zur Sicherstellung von homogenen Eigenschaften der Werkstoffe ist es wesentlich, dass ein hervorragender Dispergierzustand der Pigmente in einem flüssigen bzw. viskosen Medium erreicht wird. Dieses ist umso schwieriger, desto feinteiliger die eingesetzten Pigmente sind und desto schlechter die Verträglichkeit oder Kompatibilität zwischen Pigment und Medium ist. Wichtig sind in diesem Zusammenhang die Viskosität und die Stabilität der Mischung. Allgemein ergibt sich durch die Zugabe von feinteiligen Pigmenten ein Viskositätsanstieg. Die Viskosität kann auch nach der Dispergierung in nicht akzeptabler Weise ansteigen.

Zur Unterstützung der Dispergierung von Pigmenten in flüssigen Medien existiert daher ein umfangreicher Stand der Technik, bei dem entweder Netz- oder Dispergieradditive zugesetzt werden oder die Pulveroberfläche zur Verbesserung des Dispergiervermögens modifiziert wird.

Netz- und Dispergiermittel werden eingesetzt, um die Verträglichkeit zwischen Pulver und Medium zu vermitteln. Es sind z.B. ionische, nicht-ionische, amphiphile und polymere Verbindungen mit unterschiedlichen chemischen Strukturen verwendet worden, die jeweils für unterschiedliche Dispergierverfahren geeignet sind. So werden ionische Strukturen vornehmlich für oxidische Pulver eingesetzt, während nicht-ionische Tenside häufig bei der Dispergierung nicht-oxidischer Pulver Verwendung finden. Durch Kombination unterschiedlicher Strukturen in organischen Polymeren soll eine möglichst universelle Einsetzbarkeit von Dispergiermitteln im Hinblick auf die eingesetzten Pulver und Dispergiermedien erreicht werden.

DE-A-4236337 beschreibt die Verwendung von Polyacrylsäureestern als Dispergiermittel, die durch Umesterung von Polyacrylsäurealkylestern erhalten werden.

DE-A-10200416479 betrifft die Verwendung von Carboxylatgruppen enthaltenden Polyestern als Dispergiermittel für Pigmentkonzentrate für die Einfärbung von thermoplastischen Kunststoffen. DE-A-10200444879 beschreibt die Verwendung von Copolymerisaten als Netz- und Dispergiermittel, die durch Copolymerisation von ungesättigten Monocarbonsäurederivaten, Polyalkylenoxyallylethern und gegebenenfalls weiteren Monomeren erhältlich sind.

DE-A-10232908 beschreibt die Verwendung von speziellen, Phenylderivate enthaltenden Polysiloxanen als Dispergiermittel für wässrige Medien. EP-A-546406 und EP-A-546407 betreffen die Verwendung von organofunktionellen Polysiloxanen mit Estergruppen und langkettigen Alkylgruppen zur Modifikation feinteiliger Partikel, wie Pigmente oder Füllstoffe, oder von Glasfasern, wobei die Siloxane über ihre organischen funktionellen Gruppen mit der reaktiven Partikeloberfläche reagieren können.

Nachteilig beim Einsatz von Dispergieradditiven ist allgemein die Erhöhung der chemischen Komplexität, die letztlich auf der Verunreinigung der Gesamtmischung beruht. Es ist wünschenswert, die Anzahl der unterschiedlichen Komponenten im System so gering wie möglich zu halten.

Eine verbesserte Dispergierbarkeit von anorganischen Partikeln wird auch über die Modifizierung der Partikeloberfläche erreicht, siehe z.B. Degussa-Broschüre "Sivento Silanes for Treatment of Fillers and Pigments"; R. Janda, Kunststoff-Verbundsysteme, VCH Verlag 1990, S. 98; EP-A-753549; und W. Noll, Chemie und Technik der Silicone, S. 524, Weinheim 1968.

Darüber hinaus ist durch eine Oberflächenmodifizierung auch eine Funktionalisierung anorganischer Pulver möglich. Z.B. lassen sich funktionelle organische Gruppen auf der Partikeloberfläche verankern. Zur Oberflächenmodifizierung werden die Pulver mit Modifikatoren behandelt, die mit der Oberfläche der Partikel wechselwirken. Die Menge des einzusetzenden Modifikators wird dabei wesentlich von der zu modifizierenden Oberfläche bestimmt. Üblicherweise werden 1-10 Gew.-% bezogen auf das Pulver vorgeschlagen (z.B. für Silane in der Broschüre "Sivento Silanes for Treatment of Fillers and Pigments", Degussa AG, Frankfurt a.M.). Der Einsatz von überschüssigem Modifikator, der nicht mit der Oberfläche wechselwirkt, kann eine Aufarbeitung des Materials erschweren, z.B. werden nicht wechselwirkende leichter flüchtige Modifikatoren bei einer Entfernung des Lösemittels teilweise mit entfernt.

WO 93/21127 betrifft ein Verfahren zur Herstellung oberflächenmodifizierter nanoskaliger keramischer Pulver, wobei angegeben wird, dass bei extrem feinteiligen nanoskaligen Pulvern eine Modifizierung der Oberfläche erforderlich ist, um eine Agglomeration zu vermeiden und die Dispergierbarkeit zu verbessern.

DE-A-10304849 beschreibt eine chemomechanische Herstellung von Funktionskolloiden durch Kombination von mechanischer Reaktivzerkleinerung und Oberflächenmodifizierung zur Herstellung von Dispersionen feiner Partikel.

Allgemein wird das Dispergiervermögen durch die Modifizierung erleichtert, sie reicht aber überraschenderweise nicht aus, um hohe Füllgrade von feinteiligen anorganischen Pulvern in flüssigen Medien zu erreichen, ohne die Viskosität drastisch zu erhöhen.

WO 2004/24811 beschreibt ein Verfahren zur Herstellung von Nanokompositen, bei dem agglomerierte Nanopulver in einem organischen Lösungsmittel modifiziert werden, z.B. mit Silanen. Die so modifizierten Pulver werden entweder als Dispersion weiter verarbeitet oder vor ihrer Weiterverarbeitung getrocknet. Das Verfahren ist auf die Verarbeitung von agglomerierten Pulvern beschränkt. Bei der Verwendung von Silanen wird eine Hydrolyse-Kondensationsreaktion in Gegenwart der Pulver durchgeführt, wodurch eine Anbindung der reaktiven Silanspezies mit der Pulveroberfläche erfolgen kann. In den Beispielen werden grössere Mengen von Silanen verwendet, was zur Bildung von Nanokompositen führt. Stabile Dispersionen werden dagegen nicht erhalten, was die anschliessende Weiterverarbeitung z.B. durch Lösemittelwechsel und Weiterverarbeitung stark erschwert. Darüber hinaus ist eine Weiterverarbeitung durch Trocknung und anschliessende Handhabung der Pulver stark erschwert, insbesondere wenn das Silan einen vergleichsweise hohen Dampfdruck besitzt.

Die Aufgabe der vorliegenden Erfindung bestand daher darin, ein Verfahren bereitzustellen, mit dem stabile Dispersionen aus feinteiligen anorganischen Pulvern in hoher Konzentration in flüssigen, auch in viskosen Medien hergestellt werden können, ohne die genannten Nachteile des Stands der Technik in Kauf zu nehmen.

Eine weitere Aufgabe der vorliegenden Erfindung bestand darin, ein Verfahren bereitszustellen, mit dem oberflächenmodifizierte und funktionalisierte Partikel in hoher Konzentration dispergiert werden können.

Die Aufgabe konnte überraschenderweise durch ein zweistufiges Verfahren gelöst werden, bei dem die Oberfläche der Pulverpartikel zunächst mit geeigneten organischen Gruppen modifiziert wird und anschliessend die oberflächenmodifizierten Partikel unter Verwendung von reaktiven Siloxanen dispergiert werden, wobei auch die Siloxane organische Gruppen enthalten.

Demgemäss stellt die vorliegende Erfindung ein Verfahren zur Herstellung einer Dispersion von anorganischen Partikeln in einem flüssigen Medium bereit, bei dem anorganische Partikel, die oberflächenmodifiziert sind, so dass sie mindestens eine organische Gruppe auf der Oberfläche aufweisen, in einem flüssigen Medium mit einem reaktiven Organosiloxan vermischt werden.

Auf diese Weise konnten überraschenderweise hoch stabile Dispersionen erhalten werden, selbst wenn der Füllgrad relativ hoch war. Darüber hinaus konnten gut handhabbare Dispersionen erhalten werden, selbst wenn das eingesetzte Medium relativ hochviskos war. Im folgenden wird die Erfindung im Einzelnen beschrieben.

Bei den anorganischen Partikeln, die in dem flüssigen Medium dispergiert werden sollen, kann es sich um alle in der Technik bekannten anorganischen Partikel handeln. Es kann sich insbesondere um anorganische Partikel handeln, die gewöhnlich in Produkten oder Zusammensetzungen, z.B. als Füllstoffe, Matrixbildner, Pigmente oder zur Verleihung anderer funktioneller Eigenschaften, Verwendung finden. Bei den Produkten oder Zusammensetzungen kann es sich z.B. um Lacke, Formassen, z.B. für Kunststoff- oder Keramik-Schichten oder-Formkörper, handeln. Die nach dem Verfahren der Erfindung hergestellte Dispersion eignet sich besonders für Harze, wie sie z.B. zur Herstellung von Formkörpern eingesetzt werden und die besonders hohe Füllgrade erreichen müssen. Durch einen hohen Anteil von Füllstoffen in polymerisationsfähigen Mischungen kann der Polymerisationsschumpf verringert werden, z.B. in Dentalkompositen. Darüber hinaus eignet sich das Verfahren besonders für die Dispergierung von Pigmenten in organischen Lösemitteln. Dispersionen solcher Pigmente finden Anwendung als Additiv oder Komponente in Formkörpern, funktionellen Schichten oder Überzügen. So können die Fliesseigenschaften von flüssigen Medien kontrolliert werden. Darüber hinaus können die entsprechenden Pigmente spezifische Eigenschaften der Materialien verbessern oder ihnen verleihen, z.B. Härte, Farbigkeit, UV-, IR-Absorption oder -Reflektion, halbleitende, hoch- oder niedrigbrechende, mikrobizide, leitfähige, antistatische, antislip, antiblock-, adhäsive Eigenschaften. Verbessert werden kann die Haptik, der optische Eindruck z.B. durch Mattierung. Auch katalytische Effekte z.B. photokatalytische Funktionen.

Die anorganischen Partikel oder Teilchen können aus jedem beliebigen geeigneten Material sein. Es können auch Mischungen von Partikel verwendet werden. Beispiele für anorganische Teilchen sind Partikel aus einem Element, einer Legierung oder einer Elementverbindung. Die anorganischen Partikel bestehen vorzugsweise aus Verbindungen von Metallen oder Halbmetallen, wie z.B. Si oder Ge, oder Bor, besonders bevorzugt aus Bor-, Metall- oder Halbmetalloxiden, was hier auch hydratisierte Oxide, Oxidhydroxide oder Hydroxide einschliessen soll.

Beispiele für Metallverbindungen und Verbindungen von Halbleiterelementen oder Bor sind gegebenenfalls hydratisierte Oxide, wie ZnO, CdO, SiO₂ (in allen Modifikationen, z.B. gefällte oder pyrogene Kieselsäuren), GeO₂, TiO₂, ZrO₂, CeO₂, SnO₂, Al₂O₃ (in allen Modifikationen, insbesondere als Korund, Böhmit, AIO(OH), auch als Aluminiumhydroxid), In₂O₃, La₂O₃, Fe₂O₃, Fe₃O₄, Cu₂O, Ta₂O₅, Nb₂O₅, V₂O₅, MoO₃ oder WO₃, Mischoxide von Bor, Metallen und/oder Halbmetallen, z.B. Indium-Zinn-Oxid (ITO), Antimon-Zinn-Oxid (ATO), fluor-dotiertes Zinnoxid (FTO) und Mischoxide mit Perowskitstruktur, wie BaTiO₃ und PbTiO₃, sowie Carbonate, Sulfate, Phosphate, Silicate, Zirconate, Aluminate und Stannate von Elementen, insbesondere von Metallen oder Si, z.B. Carbonate von Calcium und/oder Magnesium, Silicate, wie Alkalisilicate, Talkum, Tone (Kaolin) oder Glimmer, und Sulfate von Barium oder Calcium. Weitere Beispiele für zweckmässige Teilchen sind ferner Magnetit, Maghemit, Spinelle (z.B. MgO·Al₂O₃), Mullit, Eskolait, Tialit, SiO₂·TiO₂, oder Biokeramiken, z.B. Calciumphosphat und Hydroxyapatit. Geeignet sind auch Kern-Schale-Teilchen, z.B. aus einer Silica-Schale und einem Kern aus Metalloxid, d.h. Metalloxid-Partikel mit einer Oberflächenbeschichtung aus SiO₂.

Es kann sich um Partikel aus Glas, Glaskeramik oder Keramik oder einem Material, die für deren Herstellung verwendet werden, handeln. Beispiele für Glas sind Borosilicatglas, Natronkalkglas oder Kieselglas. Glaskeramik oder Keramik können z.B. auf den Oxiden SiO₂, BeO, Al₂O₃, ZrO₂ oder MgO basieren. Es kann sich auch um Partikel handeln, die als Füllstoffe oder Pigmente dienen. Technisch wichtige Füllstoffe sind z.B. Füllstoffe auf Basis von SiO₂, wie Quarz, Cristobalit, Tripolit, Novaculit, Kieselgur, Kieselerde, pyrogene Kieselsäuren, Fällungskieselsäuren und Kieselgele, Silicate, wie Talkum, Pyrophyllit, Kaolin, Glimmer, Muskovit, Phlogopit, Vermiculit, Wollastonit und Perlite, Carbonate, wie Calcite, Dolomite, Kreide und synthetische Calciumcarbonate, Russ, Sulfate, wie Schwerspat und Leichtspat, Eisenglimmer, Gläser, Aluminiumhydroxide, Aluminiumoxide und Titandioxid, und Zeolithe.

Bevorzugt eingesetzte anorganische Partikel sind Bor-, Metall- oder Halbmetalloxide, einschliesslich hydratisierten Oxiden, Oxidhydroxiden oder Hydroxiden, insbesondere SiO₂, insbesondere pyrogene Kieselsäure, TiO₂, ZrO₂, Al₂O₃, insbesondere Böhmite, Gläser, Eisenoxide, ZnO und Mischoxide. Besonders bevorzugt ist der Einsatz von pyrogener Kieselsäure.

Die verwendbaren Partikel sind im allgemeinen im Handel erhältlich. Beispiele für SiO₂-Teilchen sind handelsübliche Kieselsäureprodukte, z.B. Kieselsole, z.B. Levasile^{®}, Organosole von Nissan Chemicals, z.B. MA-ST, IPA-ST, oder pyrogene Kieselsäuren, z.B. die Aerosil^{®}-Produkte von Degussa wie Aerosil OX50, Aerosil 200, Aerosil 300, die HDK-Produkte von Wacker, sowie die Cab-O-Sil Produkte von Cabot.

Beispiele für Aluminiumoxid-Partikel sind handelsübliche Produkte wie z.B. die Disperal sowie Dispal-Typen von Sasol, sowie die Aluminium-oxide nach dem Aerosil-Verfahren.

Beispiele für Titandioxid Partikel sind handelsübliche Produkte z.B. P25 und P90 von Degussa, sowie Hombitec und Hombicat von Sachtleben.

Die als Füllstoffe eingesetzten Teilchen können gewöhnlich im Handel erhalten oder nach üblichen Verfahren hergestellt werden. Bei den eingesetzten Teilchen kann es sich z.B. um Nanopartikel oder Mikropartikel handeln. Die nicht oberflächenmodifizierten anorganischen Partikel weisen bevorzugt eine spezifische Oberfläche von grösser als 50 m²/cm³, gemessen nach BET mit Stickstoff, auf.

Die anorganischen Partikel werden bzw. sind oberflächenmodiziert, so dass sie an der Oberfläche mindestens eine organische Gruppe tragen. Die Modifizierung der Partikeloberfläche ist dem Fachmann geläufig und wird im Stand der Technik häufig durchgeführt. Die Modifizierung kann durch konventionelle Verfahren erfolgen. Wenn die Modifizierung in einem Lösemittel durchgeführt wird, können die modifizierten anorganischen Partikel isoliert werden, es kann aber auch die erhaltene Dispersion ohne Isolierung in der vorliegenden Erfindung eingesetzt werden.

Durch die Oberflächenmodifizierung mit Oberflächenmodifizierungsmitteln kann die Dispergierbarkeit von anorganischen Pulvern verbessert werden. Dies wird, insbesondere bei der Modifizierung der Partikel mit Silanen, auf die Reaktion der Modifizierungsmittel mit reaktiven Gruppen auf der Oberfläche der Partikel, z.B. Hydroxygruppen, die insbesondere bei Oxidpartikeln vorhanden sind, zurückgeführt. Theoretisch ist zur Modifizierung von Pulvern eine monomolekulare Schicht von Modifizierungsmitteln wie Silan auf der Oberfläche ausreichend. In der Praxis werden zur Modifizierung von anorganischen Pulvern Konzentrationen von ca. 1% empfohlen; z.B. in der Degussa Broschüre "Sivento Silanes for Treatment of Fillers and Pigments", S. 10.

Solche oberflächenmodifizierten Partikel sind im Handel erhältlich, z.B. hydrophobierte Pulver, wie hydrophobierte Kieselsäuren, z.B. Aerosil^{®} R 9200 und Aerosil^{®} R 7200 von Degussa, hochdisperse Kieselsäuren, die von Wacker unter der Handelsbezeichnung HDK vertrieben werden, hydrophobiertes Zinkoxid VP AdNano^{®} Z 805 von Degussa, hydrophobes Titandioxid, z.B. Hombitan^{®} R320 von Sachtleben. Auch solche im Handel erhältlichen Pulver sind selbstverständlich als oberflächenmodifizierte Komponente im Verfahren der Erfindung geeignet. Darüber hinaus sind auch im Handel erhältliche Dispersionen modifizierter Partikel als oberflächemmodifizierte Komponente im Verfahren der Erfindung geeignet. Beispiele solcher Dispersionen sind modifizierte Kieselsole der Firma Clariant (z.B. Highlink NanOG-Typen), und die modifizierten Kieselsole von Nissan Chemicals, z.B. MEK-ST, MEK-ST-MS.

Wenn von nicht modifizierten Partikeln ausgegangen wird, erfolgt im ersten Schritt eine Oberflächenmodifizierung, so dass Partikel mit organischen Gruppen auf der Oberfläche erhalten werden. Die Verfahren zur Herstellung der modifizierten Partikel sind dem Fachmann vertraut. Insbesondere können die anorganischen Partikel mit mindestens einem Oberflächenmodifizierungsmittel, das mindestens eine funktionelle Gruppe, die mit Oberflächengruppen auf den anorganischen Partikeln wechselwirkt, und mindestens eine organische Gruppe aufweist, umgesetzt werden. In einer Variante kann die Herstellung der anorganischen Partikel in Anwesenheit der Oberflächenmodifizierungsmittel erfolgen, so dass die Modifizierung in situ bei der Herstellung erfolgt. Auch kolloidale Dispersionen modifizierter Partikel, hergestellt z.B. nach DE A 10304849 können eingesetzt werden.

Die Umsetzung erfolgt unter solchen Bedingungen, dass eine Anbindung des Modifizierungsmittels, z.B. durch chemische Bindung oder Wechselwirkung, auf der Oberfläche der Teilchen erfolgt. Die Bedingungen hängen naturgemäss von der Art der Teilchen und der Oberflächenmodifizierungsmittel ab. Es kann ein einfaches Rühren bei Raumtemperatur ausreichen, gegebenenfalls sind aber auch ein Energieeintrag, z.B. durch Erwärmen oder hohe Scherung (chemomechanische Reaktion), und/oder eine Katalyse, z.B. mit Säuren oder Basen, notwendig. Der Belegungsgrad der Teilchenoberflächen mit den Modifizierungsmitteln kann z.B. durch das eingesetzte Mengenverhältnis der Edukte gesteuert werden.

Dem Fachmann ist bekannt, dass sich auf der Oberfläche von Teilchen in der Regel Gruppen befinden, wobei es sich bei diesen Oberflächengruppen um funktionelle Gruppen handeln kann, die im allgemeinen relativ reaktionsfähig sind. Beispielsweise befinden sich auf der Oberfläche von Teilchen Restvalenzen, wie Hydroxygruppen und Oxygruppen, z.B. bei Metalloxidpartikeln. Das Oberflächenmodifizierungsmittel weist zum einen mindestens eine funktionelle Gruppe auf, die mit auf der Oberfläche der Teilchen vorhandenen reaktionsfähigen Gruppen unter Anbindung chemisch reagieren oder wechselwirken kann. Die Anbindung kann durch chemische Bindung, wie kovalente, einschliesslich koordinativen Bindungen (Komplexe), oder ionische (salzartige) Bindungen der funktionellen Gruppe mit den Oberflächengruppen der Teilchen erfolgen, während als Wechselwirkungen beispielhaft Dipol-Dipol-Wechselwirkungen, polare Wechselwirkungen, Wasserstoffbrückenbindungen und van der Waals-Wechselwirkungen zu nennen sind. Bevorzugt ist die Ausbildung einer chemischen Bindung. So kann zwischen den funktionellen Gruppen des Modifizierungsmittels und dem Partikel z.B. eine Säure/Base-Reaktion, eine Komplexbildung oder eine Veresterung stattfinden. Solche Oberflächenmodifizierungsmittel sind dem Fachmann bekannt und er kann ohne weiteres diejenigen auswählen, die für das jeweilige Teilchen geeignet sind.

Bei der funktionellen Gruppe, die das Oberflächenmodifizierungsmittel umfasst, handelt es sich z.B. um Carbonsäuregruppen, Säurechloridgruppen, Estergruppen, Nitril- und Isonitrilgruppen, OH-Gruppen, Alkylhalogenidgruppen, SH-Gruppen, Epoxidgruppen, Anhydridgruppen, Säureamidgruppen, primäre, sekundäre und tertiäre Aminogruppen, Si-OH-Gruppen bzw. hydrolysierbare Reste von Silanen (nachstehend erläuterte Gruppen Si-X) oder C-H-acide Gruppierungen, wie ss-Dicarbonylverbindungen sowie organische Derivate anorganischer Säuren.

Das Modifizierungsmittel kann auch mehr als eine derartige funktionelle Gruppe umfassen, wie z.B. in Aminosäuren oder EDTA.

Beispiele für geeignete Oberflächenmodifizierungsmittel sind Mono- und Polycarbonsäuren, entsprechende Säureanhydride, Säurechloride, Ester und Säureamide, Alkohole, Alkylhalogenide, Aminosäuren, Imine, Nitrile, Isonitrile, Epoxyverbindungen, Mono- und Polyamine, ss-Dicarbonylverbindungen, Silane und Metallverbindungen, die über eine funktionelle Gruppe verfügen, die mit den Oberflächengruppen der Partikel reagieren kann, und jeweils zusätzlich eine organische Gruppe aufweisen, sowie Ester anorganischer Säuren wie z.B. Mono-, Di-, oder Triester der ortho-, oligo-, oder Polyphosphorsäure, Ester der Schwefelsäure sowie Ester der Sulfonsäure. Das bevorzugt eingesetzte Reagenz für eine Oberflächenmodifizierung richtet sich wesentlich nach der Art des zu modifizierenden Pulvers. Für die Modifizierung von SiO₂ ist die Verwendung von Silanen besonders bevorzugt. Generell können ein oder mehrere Modifizierungsmittel verwendet werden.

Ferner umfasst das Oberflächenmodifizierungsmittel die organische Gruppe, mit der die Partikel modifiziert werden. Die organische Gruppe kann z.B. eine organische Gruppe mit einer oder mehreren funktionellen Gruppen oder eine organische hydrophobe und/ oder oleophobe Gruppe sein. Beispiele für solche organische Gruppen sind Alkyl-, Alkenyl-, wie Vinyl- oder Allyl-, Alkinyl- oder Arylgruppen, einschliesslich der entsprechenden cyclischen Gruppen wie Cycloalkyl, die jeweils eine oder mehrere, bevorzugt eine funktionelle Gruppe tragen können. Die Alkyl-, Alkenyl- und Alkinylgruppen können durch Sauerstoff- oder -NH-Gruppen unterbrochen sein. Die organische Gruppe kann z.B. 1 bis 18 Kohlenstoffatome enthalten, wobei C-Atome in der gegebenenfalls vorhandenen funktionellen Gruppe nicht berücksichtigt werden.

Beispiele für geeignete funktionelle Gruppen sind Epoxy-, Hydroxy-, Ether-, Amino-, Monoalkylamino-, Dialkylamino-, gegebenenfalls substituierte Anilino-, Amid-, Carboxy-, Acryl-, Acryloxy-, Methacryl-, Methacryloxy-, Silyl-, Mercapto-, Cyano-, Alkoxy-, Isocyanato-, Aldehyd-, Alkylcarbonyl-, Säureanhydrid- und Phosphorsäuregruppen. Bevorzugt werden Modifizierungsmittel eingesetzt, die eine organische Gruppe mit einer funktionellen Gruppe, insbesondere einer Methacrylfunktion, enthalten. Beispiele für konkrete organische Gruppen werden nachstehend für die bei der Modifizierung von Si02 besonders bevorzugten Silane der Formel (I) genannt. Die gleichen organischen Gruppen können auch über andere vorstehend genannte Modifizierungsmittel auf die Oberfläche der anorganischen Partikel aufgebracht werden. Dabei stellt das Modifizierungsmittel ohne die funktionelle Gruppe, die mit den reaktiven Gruppen der Partikeloberfläche wechselwirkt, in der Regel die organische Gruppe dar. Bei einer Carbonsäure ist die organische Gruppe z.B. der Rest, der ohne Carboxylgruppe verbleibt. Die organische Gruppe kann ferner gegebenenfalls übliche Substituenten, wie Chlor oder Fluor, aufweisen.

Bevorzugte Oberflächenmodifizierungsmittel sind hydrolysierbare Silane mit mindestens einer nicht hydrolysierbaren organischen Gruppe wie vorstehend definiert. Diese werden daher eingehender erläutert. Entsprechendes gilt für andere Modifizierungsmittel analog, insbesondere bezüglich geeigneter organischer Gruppen. Geeignete hydrolysierbare Silane mit nicht hydrolysierbarer organischer Gruppe besitzen z.B. die allgemeine Formel

RₐSiX₍₄₋ₐ₎ (I)

worin R gleich oder verschieden ist und einen nicht hydrolysierbaren organischen Rest darstellt, der gegebenenfalls eine oder mehrere funktionelle Gruppen aufweist, X eine hydrolysierbare Gruppe oder OH ist und a den Wert 1, 2 oder 3, vorzugsweise 1, hat.

Die hydrolysierbare Gruppe X ist z.B. Wasserstoff oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Carboxy, Amino, Monoalkylamino oder Dialkylamino mit vorzugsweise 1 bis 12, insbesondere 1 bis 6 Kohlenstoffatomen in der bzw. den Alkylgruppe(n), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy) oder Alkylcarbonyl (vorzugsweise C₂₋₇-Alkylcarbonyl, wie z.B. Acetyl).

Der nicht hydrolysierbare organische Rest R ist z.B. Alkyl (vorzugsweise C₁₋₃₀-Alkyl, wie z.B. Methyl, Ethyl, n-Propyl, Isopropyl, n-Butyl, s-Butyl und t-Butyl, Pentyl, Hexyl oder Cyclohexyl), Alkenyl (vorzugsweise C₂₋₆-Alkenyl, wie z.B. Vinyl, 1-Propenyl, 2-Propenyl und Butenyl), Alkinyl (vorzugsweise C₂₋₆-Alkinyl, wie z.B. Acetylenyl und Propargyl) und Aryl (vorzugsweise C₆₋₁₀-Aryl, wie z.B. Phenyl und Naphthyl).

Der nicht hydrolysierbare organische Rest R mit einer funktionellen Gruppe kann z.B. als funktionelle Gruppe eine Epoxid- (z.B. Glycidyl- oder Glycidyloxy-), Hydroxy-, Ether-, Amino-, Monoalkylamino-, Dialkylamino-, gegebenenfalls substituierte Anilino-, Amid-, Carboxy-, Acryl-, Acryloxy-, Methacryl-, Methacryloxy-, Mercapto-, Cyano-, Alkoxy-, Isocyanato-, Aldehyd-, Alkylcarbonyl-, Säureanhydrid- und Phosphorsäuregruppe umfassen. Diese funktionellen Gruppen sind über Alkylen-, Alkenylen- oder Arylen-Brückengruppen, die durch Sauerstoff- oder -NH-Gruppen unterbrochen sein können, an das Siliciumatom gebunden. Die Brückengruppen enthalten vorzugsweise 1 bis 18, vorzugsweise 1 bis 8 und insbesondere 1 bis 6 Kohlenstoffatome. Die genannten zweiwertigen Brückengruppen und gegebenenfalls vorliegende Substituenten, wie bei den Alkylaminogruppen, leiten sich z.B. von den oben genannten organischen Gruppen R ohne funktionelle Gruppen, d.h. den Alkyl-, Alkenyl-, Aryl-, Alkaryl- oder Aralkylresten, ab. Der Rest R kann auch mehr als eine funktionelle Gruppe aufweisen.

Bevorzugte organische Gruppen ohne funktionelle Gruppen sind Alkylgruppen wie vorstehend definiert. Beispiele für solche hydrolysierbare Silane sind Methyltriethoxysilan, Propyltrimethoxysilan, Hexadecyltrimethoxysilan, Dodecyltriethoxysilan. Es können auch gegebenenfalls fluorierte Alkylgruppen als organische Gruppen eingesetzt werden. Alkylgruppen und fluorierte Alkylgruppen eignen sich z.B. als hydrophobe und/oder oleophobe Gruppen.

Beispiele für nicht hydrolysierbare Reste R mit funktionellen Gruppen sind Glycidyloxyethyl, Glycidyloxypropyl, Aminopropyl, (Meth)acryloxymethyl, (Meth)acryloxyethyl, (Meth)acryloxypropyl und 3-Hydroxypropyl. Besonders bevorzugt sind Methacryloxyalkyl, insbesondere Methacryloxypropyl. (Meth)acryl steht für Methacryl oder Acryl. Konkrete Beispiele für entsprechende Silane sind Glycidyloxypropyltrimethoxysilan, 3-Aminopropyltrimethoxysilan, 3-Aminopropyltriethoxysilan, Hydroxymethyltriethoxysilan, 3-(Meth)acryloxypropyltriethoxysilan, 3-(Meth)acryloxypropyltrimethoxysilan, 3-(Meth)-acryloxymethyltrimethoxysilan und 3-(Meth)acryloxymethyltriethoxysilan.

Konkrete Beispiele für andere Oberflächenmodifizierungsmittel, die zur Einführung organischer Gruppen eingesetzt werden können, sind gesättigte oder ungesättigte Mono- und Polycarbonsäuren, wie z.B. Acrylsäure, Methacrylsäure oder Crotonsäure, Mono- und Polyamine, wie Methylamin, oder Ethylendiamin, ss-Dicarbonylverbindungen, wie Acetylaceton, oder Aminosäuren, organische Derivate der Schwefelsäure wie Alkylsulfate oder Fettalkoholsulfate, Ester der Sulfonsäuren wie Alkylsulfonsäuren und Alkylsulfonate, organische Phosphate wie (alkyl)ethoxylierte Phosphorsäuren oder Lecithin, Polysäuren wie Polyhydroxyasparaginsäure und Polyhydroxystearinsäure. Weitere Beispiele sind 1H,1H-Pentadecafluoroctanol, Octanol, Stearinsäure, Ölsäure, Hexansäurechlorid, Hexansäuremethylester, Hexylchlorid und Nonafluorbutylchlorid.

Das Oberflächenmodifizierungsmittel weist bevorzugt ein Molekulargewicht von nicht mehr als 10.000 und bevorzugter nicht mehr als 5.000 auf, es können aber auch Modifizierungsmittel mit höherem Molekulargewicht verwendet werden.

Nach der Oberflächenmodifizierung der anorganischen Partikel werden sie im zweiten Schritt unter Verwendung von speziellen Siloxanen in das flüssige Medium bzw. die Matrix bildenden Komponenten eindispergiert. Wie gesagt können natürlich auch im Handel erhältliche oberflächenmodifizierte anorganische Partikel direkt für den zweiten Schritt verwendet werden. Bei den eingesetzten Siloxanen handelt es sich um Organosiloxane, d.h. Siloxane, die mindestens eine organische Gruppe aufweisen. In einer speziellen Ausführungsform des erfindungsgemässen Verfahrens entspricht die oder eine organische Gruppe des Organosiloxans der oder einer organischen Gruppe, die sich auf den eingesetzten oberflächenmodifizierten anorganischen Partikel befindet.

Geeignete organische Gruppen, die sich entsprechen, sind z.B. Alkyl-, Epoxid-, Hydroxy-, Ether-, Amino-, Monoalkylamino-, Dialkylamino-, gegebenenfalls substituierte Anilino-, Amid-, Carboxy-, Acryl-, Acryloxy-, Methacryl-, Methacryloxy-, Mercapto-, Cyano-, Alkoxy-, Isocyanato-, Aldehyd-, Alkylcarbonyl-, Säureanhydrid- und Phosphorsäure-, Carbonsäure-, Ester-, Imin-, Imid-Gruppen.

Die organische Gruppe kann vom Siliziumatom des Siloxans durch beliebige Spacer entfernt sein. Gleichfalls kann die gleiche organische Gruppe von der Partikeloberfläche durch beliebige Spacer entfernt sein. Die jeweiligen Spacer müssen nicht gleich sein und können auch eine oder mehrere funktionelle Gruppen tragen. Die organische Gruppe des Organosiloxans umfasst bevorzugt eine Methacrylatfunktion.

Die Siloxane können z.B. erhalten werden durch Umsetzung mindestens eines hydrolysierbaren Silans mit mindestens einer nicht hydrolysierbaren organischen Gruppe mit Wasser. Durch die Umsetzung mit Wasser werden die hydrolysierbaren Silane unter Bildung der Hydrolysate und Kondensate hydrolysiert und in der Regel zumindest teilweise kondensiert. Hierfür eignet sich insbesondere das Sol-Gel-Verfahren. Die Umsetzung kann gegebenenfalls in Anwesenheit von Katalysatoren erfolgen. Das Organosiloxan wird bevorzugt nicht länger als drei Monate, besonders bevorzugt nicht länger als ein Monat vor Verwendung hergestellt. Die hergestellten Siloxane sind daher noch in der Weise reaktiv, dass eine weitere Reaktion über Si-O-Gruppen erfolgen kann, d.h. noch nicht alle Si-O-Gruppen abgesättigt sind. Allgemein gesagt sind reaktive Organosiloxane solche Organosiloxane, die an Si-Atomen noch hydrolysierbare Gruppen, insbesondere Gruppen X wie in Formel (I) definiert, und/oder hydrolysierte Gruppen (OH), aufweisen.

Das Organosiloxan ist insbesondere ein Kondensat von einem oder mehreren Silanen, wobei mindestens ein Silan die Formel (I) RₐSiX₍₄₋ₐ₎ wie vorstehend bei den Oberflächenmodifizierungsmitteln definiert aufweist, wobei a=1 ist (RSiX₃). Zur Herstellung des Organosiloxans werden insbesondere mindestens 10 mol-%, bevorzugt mindestens 50 mol-%, bevorzugter mindestens 80 mol-% oder 80 bis 100 mol-% eines oder mehrerer Silane der Formel (I) mit a = 1, bezogen auf alle für das Kondensat eingesetzten Silane, eingesetzt. In einer bevorzugten Ausführungsform sind alle Silane, aus denen das Organosiloxan bzw. Kondensat gebildet wird, Silane der Formel (I) mit a =1. Diese Silane der Formel (I) mit a =1 verfügen nach Hydrolyse der Gruppen X über 3 reaktive Silanolfunktionen. Die Kondensation von 2 Silanolgruppen je Molekül führt bereits zur Bildung einer (linearen) Gerüststruktur. Zusätzlich zu endständigen reaktiven Si-O-Gruppen enthält das Organosiloxan daher weitere Si-O-Funktionalitäten im Molekülgerüst.

Ohne sich an eine Theorie binden zu wollen wird davon ausgegangen, dass im flüssigen Medium durch die Siloxane eine Struktur aufgebaut wird, in der die oberflächenmodifizierten Partikel besonders vorteilhaft eingebaut werden. Durch die Verwendung reaktiver Siloxane findet der Dispergiervorgang in Anwesenheit von chemisch reaktiven Organosiloxanen statt. Durch die vorherige Oberflächenmodifizierung der Pulver wird eine chemische Reaktion des reaktiven Siloxans über Si-O-Funktionen mit der Pulveroberfläche jedoch behindert. Durch die organischen Gruppen der modifizierten Partikel sowie der Organosiloxane lässt sich die Kompatibilität der Komponenten aufeinander abstimmen. In der Ausführungsform der Verwendung von chemisch gleichen Gruppen bei Siloxan und modifiziertem Partikel erfolgt die Abstimmung der Komponenten in der Mischung besonders einfach.

Die Verwendung von trifunktionellen Silanen der Formel I (a = 1) führt in der Kondensationsreaktion zum Aufbau von verzweigten Siloxan-Strukturen. Diese können im flüssigen Medium flächige (2-dimensionale) und 3-dimensionale Netzwerke ausbilden. Durch den Anteil an trifunktionellen Silanen in der Reaktionsmischung wird daher nicht nur die Anzahl der reaktiven Si-O-Funktionen sondern auch die Dichte der entstehenden Struktur gesteuert. Das mehrdimensionale Siloxan-Netzwerk durchsetzt das flüssige Medium und trägt organische Gruppen, die für die Dispergierung der oberflächenmodifizierten Partikel vorteilhaft sind, so dass die Partikel in die Netzwerkstruktur eingelagert werden können.

Durch geeignete Einstellung der Parameter, z.B. Auswahl der Ausgangssilane, Kondensationsgrad, Lösungsmittel, Temperatur, Wasserkonzentration, Katalysator, Dauer oder pH-Wert, kann das gewünschte Organosiloxan erhalten werden. Die Verfahren zur Herstellung solcher Organosiloxane sind dem Fachmann bekannt. Einzelheiten zum Sol-Gel-Verfahren finden sich z.B. bei C.J. Brinker, G.W. Scherer: "Sol-Gel Science - The Physics and Chemistry of Sol-Gel-Processing", Academic Press, Boston, San Diego, New York, Sydney (1990).

Als hydrolysierbare Silane mit mindestens einer nicht hydrolysierbaren organischen Gruppe, die für die Herstellung der Organosiloxane eingesetzt werden, werden bevorzugt die vorstehend definierten Silane der Formel (I) oder Mischungen davon verwendet. Gegebenfalls können auch zusätzlich hydrolysierbare Silane ohne nicht hydrolysierbare Gruppe, z.B. Verbindungen der Formel SiX₄, worin X wie in Formel (I) definiert ist, verwendet werden, die dann ebenfalls in das Organosiloxan eingebaut werden. Bevorzugt werden aber nur Organosilane der Formel (I) zur Herstellung der Organosiloxane und besonders bevorzugt nur ein Silan der Formel (I) verwendet.

Bevorzugt werden hydrolysierbare Silane der Formel (I) eingesetzt, worin X Alkoxy, Carboxy, Amino oder Halogen ist. Mindestens ein nicht hydrolysierbarer Rest des Silans (die organische Gruppe R in Formel (I)), das zur Herstellung des Siloxans verwendet wird, ist funktionell gleich mit der organischen Gruppe auf der Oberfläche der modifizierten Partikel. Das Organosiloxan weist bevorzugt eine organische Gruppe mit einer Methacrylfunktion auf. Bevorzugte Silane zur Herstellung der Organosiloxane sind dementsprechend Silane der Formel (I), worin R eine organische Gruppe mit einer Methacrylfunktion ist, wobei der Einsatz von γ-Methacryloxypropylsilan besonders bevorzugt ist.

Es versteht sich, dass es zweckmässig sein kann, für die Oberflächenmodifizierung und für die Herstellung des Organosiloxans jeweils das gleiche Silan der Formel (I) zu verwenden. Es können aber auch verschiedene Silane oder auch andere Oberflächenmodifizierungsmittel verwendet werden, solange das Organosiloxan und die anorganischen Partikel eine organische Gruppe aufweisen, die funktionell gleich sind.

Wie vorstehend erläutert ist die Umsetzung von Silanen mit Wasser zur Herstellung von Siloxanen an sich bekannt und der Fachmann kann die jeweiligen Parameter auf Basis der verwendeten Ausgangssubstanzen und der gewünschten Eigenschaften ohne weiteres auswählen. Beispiele für geeignete Katalysatoren für die Umsetzung sind Säuren, Basen und Fluoridionen. Die Reaktion kann mit oder ohne Lösemittel durchgeführt werden. Beispiele für geeignete Lösemittel sind Wasser und organische Lösemittel, z.B. Alkohole, Ketone oder Ester, oder Gemische davon. Bezüglich konkreter Beispiele für einsetzbare organische Lösemittel wird auf die entsprechenden Beispiele verwiesen, die nachstehend für die flüssigen Medien angegeben werden. Die Umsetzung der Silane kann separat oder in Gegenwart der oberflächenmodifizierten Partikel erfolgen. Die Temperatur und die Dauer der Umsetzung können in breiten Bereichen gewählt werden und hängt natürlich auch z.B. von der Hydrolysestabilität der eingesetzten Silane, der Art und Menge des eingesetzten Katalysators usw. ab. Die Reaktion wird im allgemeinen mindestens bis zum Klarpunkt geführt. Im allgemeinen kann die Reaktion z.B. bei einer Temperatur im Bereich von 15 bis 150°C z.B. über einen Zeitraum von 15 bis 360 min durchgeführt werden.

Anschliessend können bei Bedarf flüchtige Komponenten ganz oder teilweise abdestilliert werden. Die erhaltene Mischung kann aber auch ohne Destillation eingesetzt werden. Eine Abdestillation kann z.B. sinnvoll sein, um den Reaktionsgrad, d.h. den Kondensationsgrad der Organosiloxane, durch Verschiebung des Gleichgewichts weiter zu erhöhen oder um unerwünschte Nebenprodukte, wie z.B. Methanol, das sich bei der Hydrolyse von Methoxysilanen bildet, zu entfernen.

Die modifizierten Partikel werden in einem flüssigen Medium mit dem Organosiloxan vermischt, um die Dispersion zu erhalten. Bei dem flüssigen Medium kann es sich um jedes beliebige flüssige Medium handeln, insbesondere handelt es sich um ein Lösemittel, wie Wasser oder ein organisches Lösemittel, eine Bindemittelkomponente oder eine Mischung davon. Gegebenenfalls kann auch eine nicht flüssige oder hochviskose Bindemittelkomponente durch Mischung mit einem geeigneten Lösemittel als flüssiges Medium verwendet werden. Bei der Bindemittelkomponente handelt es sich aber bevorzugt um eine flüssige Bindemittelkomponente. Insbesondere wenn Bindemittelkomponenten verwendet werden, kann das flüssige Medium ein Medium mit gewisser Viskosität sein. Überraschenderweise liefert das erfindungsgemässe Verfahren selbst dann gute Ergebnisse, wenn die Viskosität des eingesetzten flüssigen Mediums (Ausgangsmedium), d.h. ohne Zusatz der anderen Komponenten, eine hohe Viskosität aufweist, z.B. eine Viskosität η > 100 mPa s (dynamische Viskosität, gemessen bei 23 °C in Platte-Platte Geometrie bei 0,25 mm Spaltweite) .Das Ausgangsmedium hat zweckmässigerweise eine Viskosität von höchstens 42 Pa s (dynamische Viskosität, gemessen bei 23°C in Platte-Platte Geometrie bei 0,25 mm Spaltweite). In einer bevorzugten Ausführungsform umfasst oder ist das flüssige Medium eine flüssige Bindemittelkomponente, insbesondere ein reaktives Harz und besonders bevorzugt ein Acrylatharz.

Bei der Bindemittelkomponente kann es sich z.B. um ein oder mehrere Monomere, Oligomere, Polymere oder reaktive Harze handeln. Solche Bindemittelkomponenten werden z.B. allgemein als Matrix bildende Komponente verwendet. Solche Bindemittelkomponenten sind in der Regel reaktiv und werden durch Polymerisation oder Härtung z.B. in die festen Kunststoff- oder Kunstharzprodukte überführt. Sie sind in grosser Vielfalt im Handel erhältlich.

In einer anderen bevorzugten Ausführungsform umfasst oder ist das flüssige Medium ein Lösemittel, insbesondere ein organisches Lösemittel.

Beispiele für Lösemittel, die für das flüssige Medium geeignet sind, sind Wasser und organische Lösemittel, wie Alkohole, z.B. Methanol, Ethanol und 1-Propanol, Ester, z.B. Butylacetat und Ethylacetat, Mono-, Di- und Triglyceride, z.B. Fettsäureester, z.B. Palmsäureester und Kokossäureester, Ketone, z.B. Aceton, Ethylmethylketon und Methyl-iso-butylketon, Cyclohexanon, Siliconöle, z.B. Cyclomethicon und Dimethicon, aliphatische und aromatische Kohlenwasserstoffe, z.B. Pentan, Heptan, Isooctan, Cyclohexan, Toluol und Xylol, und Ether, z.B. Diethylether, Polyethylenglycole und deren Derivate.

Beispiele für flüssige Bindemittelkomponenten sind:

### Acrylate und Acrylatharze:

(Meth)acrylsäure, Ester der (Meth)acrylsäure mit Mono-, Di- und Polyalkoholen, wie Hexamethylendioldiacrylat, Trigema, PETA, Di-PETA, Bis-GMA, TEGDMA, Phosphonsäureacrylat, Hydroxyethylmethacrylat, Glycerin-1,3-dimethacrylat, und Acrylatmodifizierte Oligomere und Polymere; Zubereitungen von Acrylat-Harzen sind im Handel erhältlich, wie z.B. unter der Handelbezeichnung Laromer^{®} von BASF, z.B. die Typen LR 8765, LR 8863, LR8800;

### Epoxide und Epoxidharze:

Glycidether, wie Bisphenol A-glycidether und dessen Derivate, im Handel erhältliche Epoxidharze, z.B. Epikote^{®} 1100, Epikote^{®} 815, Epikote^{®} 235 von Hanf und Nelles chemische Produkte;
sowie Alkydharze, Siliconharze, Polyhydroxyverbindungen, wie Glycerin, Polyetherpolyole und Polyesterpolyole, Mono- und Diolefine, wie Penten und Terpinol.

Die Reihenfolge, in der die drei Komponenten, d.h. die oberflächenmodifizierten Partikel, das Organosiloxan und das flüssige Medium, miteinander vermischt werden, um eine Dispersion zu erhalten, ist beliebig. Die oberflächenmodifizierten Partikel können z.B. als trockenes Pulver oder Dispersion in das flüssige Medium eingearbeitet werden, wobei das Organosiloxan bereits im flüssigen Medium enthalten ist oder gleichzeitig oder erst nachträglich zugegeben wird. Die oberflächenmodifizierten Partikel können z.B. auch als trockenes Pulver oder Dispersion mit dem Organosiloxan vermischt werden und anschliessend wird diese Mischung zum flüssigen Medium gegeben. Auch das Organosiloxan kann als solches oder in einem Lösemittel, z.B. in Form eines Sols, eingesetzt werden. So kann das Organosiloxan separat hergestellt werden oder in Anwesenheit der oberflächenmodifizierten Partikel. Auch andere Varianten sind denkbar, wobei z.B. zuerst nur ein Teil einer Komponente zugesetzt wird und der Rest zu einem späteren Zeitpunkt.

Die Mischung bzw. Einarbeitung der Komponenten zur Erzielung einer Dispersion kann mit jeder beliebigen Mischvorrichtung erfolgen, z.B. unter Verwendung einer Dispergiermaschine. Beispiele für geeignete Dispergiermaschinen sind Leitstrahlmischer, Dissolver, Düsenstrahldispergatoren, Homogenisatoren, Turborührer, Mühlen, wie Mühlen mit losen Mahlwerkzeugen, z.B. Rührwerkskugelmühlen, Mörsermühlen, Kolloidmühlen, Kneter, wie Scherwalzenkneter, und Walzenstühle.

Die Mengen und Anteile der Komponenten für die Dispersion können aus breiten Bereichen ausgewählt werden. Es können z.B. 1 bis 90 Gew.-% Siloxan in der Mischung eingesetzt werden, bevorzugt 5 bis 50 Gew.-% und besonders bevorzugt 5 bis 30 Gew.-% bezogen auf die Gesamtzusammensetzung. Die Menge an oberflächenmodifizierten anorganischen Partikel wird bevorzugt so gewählt, dass die Konzentration der Partikel in der Dispersion grösser als 2 Vol.-%, bevorzugt grösser als 3 Vol.-% ist.

In der Dispersion können je nach beabsichtigter Anwendung weitere Additive enthalten sein, z.B. farbgebende Mittel, Härter, Vernetzungsmittel, Verlaufmittel, die nach Herstellung der Dispersion oder gegebenenfalls vorher zugesetzt werden können.

Erstaunlichweiser können hochstabile Dispersionen der anorganischen Partikel, selbst in relativ viskosen flüssigen Medien erhalten werden. Darüber hinaus können relativ hohe Füllgrade erreicht werden. Die Dispersion eignen sich z.B. für Lacke oder Formmassen, die nach einer Härtung in Beschichtungen oder Formkörper überführt werden können. Die Dispersionen in reaktiven Harzen eignen sich insbesondere für Dentalkomposite. Weitere Anwendungsfelder der erfindungsgemässen Dispersionen sind Additive in Beschichtungsmaterialien, wie z.B. Kratzfestadditive oder UV-Schutz-Additive.

### Beispiele

### Versuch 1 Herstellung eines oberflächenmodifizierten pyrogenen Si02

In Butanon (Sigma-Aldrich, 800 g) wird unter Rühren Aerosil A 200 (Degussa, 200 g) eingebracht. Zu der Mischung wird Methacryloxypropyltrimethoxysilan (ABCR, 36,22 g) sowie Essigsäure (Sigma-Aldrich, 99-100%, 2,01 g) gegeben und eine Stunde bei Raumtemperatur gerührt. Anschliessend wird die Dispersion im Rotationsverdampfer bei einer Badtemperatur von 65 °C unter reduziertem Druck eingeengt. Das noch nasse Pulver wird in einem Vakuumtrockenschrank überführt und dort bei 80°C 14 h getrocknet. Die Charakterisierung des oberflächenmodifizierten Pulvers erfolgt durch Thermogravimetrie (TG). Bis zu einer Temperatur von 244°C beträgt der Massenverlust 0,8 Gew.-%. Zwischen 260 und 360°C tritt ein Massenverlust von 6,4 Gew.-% ein. Die Masse beträgt bei 800°C 90,05 % des oberflächenmodifizierten Aerosils.

### Versuch 2

a) Herstellung des Organosiloxans: Methacryloxypropyltrimethoxysilan (ABCR, 201,6 g) wird mit H₂O (21,95 g) unter Rühren versetzt. Zu dieser Mischung wird Essigsäure (99-100%, 2,93 g) gegeben. Es wird 30 min bei Raumtemperatur gerührt, bis eine klare, einphasige Lösung vorliegt.
b) Herstellung der Dispersion: Laromer 8863 (BASF, 800 g) wird mit dem Siloxan aus a versetzt. Anschliessend wird Aerosil R7200 (Degussa, 576 g) portionsweise eingebracht. Die Mischung wird in einer Rührwerkskugelmühle (PML1, Bühler AG) im Passagenbetrieb vermahlen. Als Kugelfüllung werden Yttrium stabilisierte Zirkonoxidkugeln (2,52 kg) mit einem Durchmesser von 1,75 mm verwendet, so dass der Mahlbehälter zu 70 % gefüllt ist. Die Umdrehungszahl bei der Vermahlung ist 1200 min⁻¹. Insgesamt wird die Mischung in 10 Passagen vermahlen.

Die Dispersion ist über 4 Monate bei Raumtemperatur lagerstabil. Sie zeigt scherverdünnendes Verhalten. Die Viskosität beträgt bei einer Scherrate von 1 s⁻¹ 15,2 Pa s und bei einer Scherrate von 150 s⁻¹ 3,01 Pa s.

### Versuch 3

a) Herstellung des Organosiloxans: Methacryloxypropyltrimethoxysilan (ABCR, 8 g) wird mit H₂O (0,88 g) unter Rühren versetzt. Zu dieser Mischung wird Essigsäure (99-100%, 0,32 g) gegeben. Es wird 30 min bei Raumtemperatur gerührt, bis eine klare, einphasige Lösung vorliegt.
b) Herstellung der Dispersion: Laromer 8800 (150,3 g) wird mit dem Siloxan aus a versetzt. Anschliessend wird Aerosil R711 (40 g) eingearbeitet. Die erhaltene Mischung wird mittels eines Walzwerks geschert. Hierzu werden 12 Passagen gefahren.

Die Dispersion zeigt ein scherverdünnendes Verhalten. Die Viskosität liegt bei einer Scherrate von 100 s⁻¹ bei 52,2 Pa s und bei 200 s⁻¹ bei 31 Pa s.

### Versuch 4 (Vergleichsbeispiel)

Zu dem Laromer 8800 wird protionsweise Aerosil R711 gegeben. Es zeigt sich, dass sich nur 20 g einarbeiten lassen.

### Versuch 5

a) Herstellung des Hydrolysats: Methacryloxypropyltrimethoxysilan (8,0 g, ABCR) wird mit H₂O (0,87 g) unter Rühren versetzt. Zu dieser Mischung wird Essigsäure (99-100%, 0,32 g) gegeben. Es wird 30 min bei Raumtemperatur gerührt, bis eine klare, einphasige Lösung vorliegt.
b) Herstellung der Dispersion: Laromer 8800 (150 g) wird mit dem Organosiloxan aus a versetzt. Anschliessend wird Aerosil R7200 (40 g) eingearbeitet. Die erhaltene Mischung wird mittels eines Walzwerks geschert. Hierzu werden 12 Passagen gefahren.

Die Mischung zeigt ein scherverdünnendes Verhalten. Die Viskosität liegt bei einer Scherrate von 101 s⁻¹ bei 31,5 Pa s und bei 200 s⁻¹ bei 27,4 Pa s

## Patentansprüche

1. Verfahren zur Herstellung einer Dispersion von anorganischen Partikeln in einem flüssigen Medium, bei dem anorganische Partikel, die oberflächenmodifiziert sind, so dass sie mindestens eine organische Gruppe auf der Oberfläche aufweisen, in einem flüssigen Medium mit einem Organosiloxan vermischt werden.

2. Verfahren nach Anspruch 1, wobei das Organosiloxan ein Kondensat von einem oder mehreren Silanen umfassend ein Silan der Formel RSiX₃ (I), worin R einen nicht hydrolysierbaren organischen Rest darstellt, der gegebenenfalls eine oder mehrere funktionelle Gruppen aufweist und X eine hydrolysierbare Gruppe oder OH ist, ist.

3. Verfahren nach Anspruch 2, wobei mindestens 10 mol-%, bevorzugt mindestens 50 mol-% und bevorzugter 80 bis 100 mol-% der Silane für das Kondensat ein Silan der Formel RSiX₃ (I) sind.

4. Verfahren nach einem der Ansprüche 1 bis 3, wobei das Organosiloxan ein reaktives Organosiloxan ist.

5. Verfahren nach einem der Ansprüche 1 bis 4, **dadurch gekennzeichnet, dass** das Organosiloxan durch Umsetzung mindestens eines hydrolysierbaren Silans mit mindestens einer nicht hydrolysierbaren organischen Gruppe mit Wasser hergestellt wird.

6. Verfahren nach einem der Ansprüche 1 bis 5, **dadurch gekennzeichnet, dass** das flüssige Medium, die oberflächenmodifizierten anorganischen Partikel und das Organosiloxan in einer Dispergiermaschine gemischt werden.

7. Verfahren nach einem der Ansprüche 1 bis 6, **dadurch gekennzeichnet, dass** die Konzentration der oberflächenmodifizierten anorganischen Partikel in der Dispersion grösser als 3 Vol.-% ist.

8. Verfahren nach einem der Ansprüche 1 bis 7, **dadurch gekennzeichnet, dass** die nicht oberflächenmodifizierten anorganischen Partikel eine spezifische Oberfläche von grösser als 50 m²/cm³, (gemessen nach BET mit Stickstoff), aufweisen.

9. Verfahren nach einem der Ansprüche 1 bis 8, **dadurch gekennzeichnet, dass** als anorganische Partikel SiO₂ verwendet wird.

10. Verfahren nach nach Anspruch 9, **dadurch gekennzeichnet, dass** pyrogene Kieselsäure als anorganische Partikel verwendet wird.

11. Verfahren nach einem der Ansprüche 1 bis 9, **dadurch gekennzeichnet, dass** das flüssige Medium Wasser, ein organisches Lösemittel, eine Bindemittelkomponente oder eine Mischung davon ist.

12. Verfahren nach Anspruch 10, **dadurch gekennzeichnet, dass** das flüssige Medium ein organisches Harz als Bindemittelkomponente umfasst oder ist.

13. Verfahren nach Anspruch 10, **dadurch gekennzeichnet, dass** das flüssige Medium ein organisches Lösemittel umfasst oder ist.

14. Verfahren nach einem der Ansprüche 1 bis 12, wobei mindestens eine organische Gruppe des Organosiloxans der mindestens einen organischen Gruppe auf der Oberfläche der anorganischen Partikel entspricht.

15. Verfahren nach einem der Ansprüche 1 bis 13, **dadurch gekennzeichnet, dass** das flüssige Medium eine Viskosität η > 100 mPa s (dynamische Viskosität, gemessen bei 23 C in Platte-Platte Geometrie) aufweist.

16. Verfahren nach einem der Ansprüche 1 bis 14, **dadurch gekennzeichnet, dass** das flüssige Medium ein reaktives Harz umfasst oder ist.

17. Verfahren nach einem der Ansprüche 1 bis 15, **dadurch gekennzeichnet, dass** das flüssige Medium ein Acrylharz umfasst oder ist.

18. Verfahren nach einem der Ansprüche 1 bis 16, **dadurch gekennzeichnet, dass** das Organosiloxan aus Struktureinheiten von nur einem Organosilan gebildet ist.

19. Verfahren nach einem der Ansprüche 1 bis 17, **dadurch gekennzeichnet, dass** mindestens eine organische Gruppe des Organosiloxans eine Methacrylfunktion umfasst.

20. Verfahren nach einem der Ansprüche 1 bis 18, **dadurch gekennzeichnet, dass** ein γ-Methacryloxypropylsilan zur Oberflächenmodifizierung der anorganischen Partikel und/oder zur Herstellung des Organosiloxans verwendet wird.

21. Verfahren nach einem der Ansprüche 1 bis 19, **dadurch gekennzeichnet, dass** die hergestellte Dispersion eine Dentalkomposit-Zusammensetzung, ein Lack oder eine Formmasse ist.

22. Dispersion von anorganischen Partikeln in einem flüssigen Medium, umfassend oberflächenmodifizierte anorganische Partikel mit mindestens einer organischen Gruppe auf der Oberfläche, ein flüssiges Medium und ein Organosiloxan mit einer organischen Gruppe, die der organischen Gruppe auf der Oberfläche der anorganischen Partikel entspricht, erhältlich nach einem Verfahren der Ansprüche 1 bis 20.

23. Verwendung von Dispersionen erhältlich nach Anspruch 21 als Additiv oder Komponenten in einem Lack, Beschichtung, Formmasse, Dentalmaterial.
